# EUROPÄISCHE PATENTSCHRIFT

(11) **EP 0 444 398 B1**
(45) Veröffentlichungstag und Bekanntmachung des Hinweises auf die Patenterteilung: **02.03.1994**
(21) Anmeldenummer: 91100128.7
(22) Anmeldetag: 03.01.1991
(51) Int. Cl.: B60C 23/04

(54) **Einrichtung zur Überwachung des Druckes einer mit dem Druck eines Fahrzeugreifens beaufschlagten Messkammer**
Monitoring device for the pressure of a mesure chamber subjected to the pressure of a vehicle tyre
Dispositif de surveillance de la pression d'une chambre de mesure soumise à la pression d'un pneumatique de véhicule

(30) Priorität: 24.02.1990 DE 4005897
(43) Veröffentlichungstag der Anmeldung: 04.09.1991
(73) Patentinhaber: WABCO Vermögensverwaltungs-GmbH, D-30432 Hannover (DE)
(72) Erfinder: Bartscher, Peter, W-3000 Hannover 91 (DE); Singbartl, Günther, W-3000 Hannover 1 (DE); Petersen, Erwin, Dr., W-3050 Wunstorf 1 (DE); Ulrich, Helmut, W-3257 Springe 1 (DE)
(74) Vertreter: Schrödter, Manfred, Dipl.-Ing.

(56) Entgegenhaltungen:
- EP-A- 0 417 427
- DE-A- 1 680 495
- GB-A- 2 055 204
- US-A- 3 225 784
- US-A- 3 522 789

## Beschreibung

Die Erfindung betrifft eine Einrichtung zur Überwachung des Druckes eines Fahrzeugreifens gemäß dem Oberbegriff des Patentanspruchs 1.

Eine solche Einrichtung ist durch die DE 28 13 058 C2 vorbekannt. Die vorbekannte Einrichtung tastet mit einer am Fahrzeugrad angeordneten druckempfindlichen Einrichtung den Reifendruck ab und betätigt mit diesem bei unterschrittenem vorgegebenen Reifendruck ein Stellglied derart, daß dieses einen Stellweg erzeugt. Ein achsfest angeordneter Sensor tastet die Stellung des Stellgliedes ab und erkennt dadurch einen Reifendruck, der unterhalb des vorgegebenen Reifendruckes liegt. Eine dementsprechende Information des Sensors ist über eine Auswerteschaltung einer Anzeigeeinrichtung, z.B. im Fahrerhaus, zuführbar.

Bei einem Reifendruck gleich dem oder höher als der vorgegebene Reifendruck steht, der konstruktiven Gegebenheit der druckempfindlichen Einrichtung entsprechend, an dem Stellglied kein Reifendruck an. Infolge dessen befindet sich das Stellglied, mit einer Rückstellkraft beaufschlagt, in einer Ausgangsstellung, in der keine Anzeige erfolgt, bzw. der Sensor erkennt, daß der vorhandene Reifendruck nicht unterhalb des vorgegebenen Reifensolldruckes liegt.

Das Stellglied kann aber auch die vorerwähnte nichtanzeigende Ausgangsposition einnehmen, wenn infolge stark abgefallenen Reifendruckes der das Stellglied beaufschlagende Reifendruck so niedrig geworden ist, daß die dem Reifendruck entgegengerichtete Rückstellkraft überwiegt. Die vorbekannte Einrichtung hat daher den Nachteil, daß die Reifendrucküberwachung nur bis zu einem minimalen Reifendruck, dessen Höhe im wesentlichen durch die auf das Stellglied gerichtete Rückstellkraft bestimmt ist, zuverlässig erfolgen kann.

Der Erfindung liegt daher die Aufgabe zugrunde, eine Einrichtung der eingangs erwähnten Art so zu verbessern, daß im Vergleich zu der eingangs erwähnten Einrichtung ein unter den Solldruck abfallender Reifendruck auch noch bei gänzlich entleertem Reifen bzw. ein Wegfall eines dem Reifendruck entsprechenden Meßdruckes an der druckempfindlichen Einrichtung, eine bleibende Anzeige erzeugt.

Diese Aufgabe wird durch die im Patentanspruch 1 angegebene Erfindung gelöst. Weiterbildungen und vorteilhafte Ausführungsbeispiele sind in den Unteransprüchen angegeben.

Ein Vorteil der Erfindung besteht darin, daß auch eine Unterbrechung der Verbindung zwischen dem Reifen und der druckempfindlichen Einrichtung, z.B. hervorgerufen durch eine fehlerhafte Montage oder eine Zerstörung während des Fahrbetriebes, bis zur Abstellung eines solchen unerwünschten Zustandes durch das Signal angezeigt bleibt.

In einer Weiterbildung gemäß Patentanspruch 8 hat die Erfindung den Vorteil, daß diese Anzeige bei eingeschaltetem und nicht eingeschaltetem elektrischen bzw. elektronischen Teil der Reifendrucküberwachung durch ein Signal wahrnehmbar ist.

Die erwähnte Weiterbildung hat weiterhin den Vorteil, daß mit ihr während des Auffüllens eines entleerten Reifens das Erreichen des vorgegebenen Reifensolldruckes, sowie auch die Funktionstüchtigkeit der druckempfindlichen Einrichtung erkennbar ist.

Aus der GB-A-2 055 204 ist eine Einrichtung zur Überwachung des Reifendruckes eines Fahrzeugs bekannt, bei welcher ein Stellglied vom Reifendruck gegen eine Rückstellkraft in einer nicht anzeigenden Stellung gehalten wird, wenn der Reifendruck eine vorgegebene Höhe hat oder die vorgegebene Höhe überschreitet. Bei Absinken des Reifendruckes auf einen Wert unterhalb der vorgegebenen Höhe wird der das Stellglied beaufschlagende Druck über eine von einem Druckmeßglied betätigte Ventileinrichtung zur Atmosphäre hin abgebaut und das Stellglied von der Rückstellkraft in eine einen Druckabfall signalisierende Stellung gebracht. Das Druckmeßglied wird von einer Feder gebildet, die einen Kolben gegen den auf den Kolben einwirkenden Druck in einer Meßkammer belastet. Der Kolben dient zusätzlich als bewegliches Ventilglied der Ventileinrichtung.

Bei dieser bekannten Einrichtung ist das Druckmeßglied jedoch nicht als Hilfsstellglied ausgebildet, so daß es auch nicht mit dem Stellglied in mechanische Wirkverbindung gebracht werden kann. Das Stellglied kann vom Druckmeßglied nicht in seine Anzeigestellung gebracht oder in dieser gehalten werden, wenn die als Rückstellkraft für das Stellglied dienende Feder, welche das Stellglied bei Druckabfall im Reifen in die Anzeigestellung bringt, erlahmt ist oder bricht.

Von Nachteil ist bei dieser bekannten Einrichtung auch noch, daß das Stellglied in seiner nicht anzeigenden Stellung ständig vom Reifendruck belastet wird. Bei schadhafter Dichtung zwischen Stellglied und Gehäuse kann der Reifen über die schadhafte Dichtung zur Atmosphäre hin entlüftet werden. Eine Fehlerquelle, die zum ungewollten Entlüften des Reifens führen kann, kann somit das Gerät, welches den Reifendruck überwachen soll, selbst sein.

Bei einer aus der US-A-3 522 789 bekannten Einrichtung zum Anzeigen eines Druckabfalls in einem Fahrzeugreifen wirkt ein als Feder ausgebildetes Druckmeßglied ständig mit einem Stellglied zum Anzeigen eines Druckabfalls im Fahrzeugreifen zusammen. Das Stellglied ist als Hohlkolben ausgebildet und wird bei normalem Reifendruck, der auch in einer Meßkammer der Einrichtung ansteht, gegen die Kraft des Druckmeßgliedes in einer nicht anzeigenden Stellung gehalten. Der Innenraum des Stellgliedes ist über ein vom Druckmeßglied betätigbares Einlaßventil mit der Meßkammer und über ein vom Druckmeßglied betätigbares Auslaßventil mit der Atmosphäre verbindbar. In der nicht anzeigenden Stellung des Stellgliedes ist dessen Innenraum mit der Atmosphäre verbunden und gegen die Meßkammer abgesperrt. Fällt der Reifendruck soweit ab, daß die vom Druckmeßglied auf das Stellglied ausgeübte Kraft größer wird als die entgegengerichtet auf das Stellglied einwirkende Kraft des Druckes in der Meßkammer, so wird das Stellglied vom Druckmeßglied in die Anzeigeposition gebracht. Dabei schließt das Auslaßventil und das Einlaßventil öffnet. Der Inneraum des Stellgliedes ist jetzt mit der Meßkammer verbunden, so daß Druckgleichgewicht zwischen dem Druck in der Meßkammer und dem Druck im Inneraum des Stellgliedes herrscht. Durch diese Maßnahme kann das Druckmeßglied sehr genau auf Änderungen des Reifendruckes reagieren.

Jedoch weist auch diese bekannte Einrichtung keine die Funktion eines Hilfsstellgliedes erfüllende Mittel auf, mit denen der Stellweg bei Störungen an der Einrichtung hilfsweise erzeugt werden könnte.

Auch diese bekannte Einrichtung weist den Nachteil auf, daß der Reifen über eine möglicherweise schadhafte Dichtung der Einrichtung entlüftet werden kann.

Bei einer aus der US-A 3 225 784 bekannten Einrichtung zur Überwachung des Reifendruckes wird ein Stellglied vom Reifendruck in einer Meßkammer gegen die Kraft eines als Feder ausgebildeten Druckmeßgliedes in seiner nicht anzeigenden Stellung gehalten. Sinkt der Reifendruck soweit ab, daß die Kraft des Druckmeßgliedes größer wird als die Kraft des entgegengerichtet auf das Stellglied einwirkenden Reifendruckes, so wird vom Druckmeßglied ein Durchlaß freigegeben und ein Ventil in die Offenstellung gebracht. Über den Durchlaß besteht jetzt eine freie Verbindung zwischen der Meßkammer und einer Auslaßkammer. Die Auslaßkammer steht jetzt über das geöffnete Ventil mit der Atmosphäre in Verbindung. Die von der Auslankammer durch das Ventil zur Atmosphäre hin strömende Druckluft wird an einer im Bereich des Ventils angeordneten Federzunge vorbeigeführt, wodurch ein akustisches Signal erzeugt wird.

Auch diese bekannte Einrichtung weist keine Mittel zur hilfsweisen Erzeugung eines Stellweges auf. Zudem hat auch diese bekannte Einrichtung den Nachteil, daß das Stellglied ständig vom Reifendruck beaufschlagt wird.

Eine aus der DE-A-1 680 495 bekannte Einrichtung zur Überwachung des Reifendruckes weist ein vom Reifendruck gegen die Kraft eines Druckmeßgliedes belastetes Stellglied auf, welches sich bei einem vorgegebenen Normaldruck in seiner nicht anzeigenden Stellung befindet. Sinkt der Reifendruck soweit ab, daß die Kraft des Druckmeßgliedes größer wird als die Kraft des entgegengerichtet auf das Stellglied einwirkenden Reifendruckes in einer Meßkammer, so wird vom Druckmeßglied ein Ventil in die Schließstellung gebracht, welches bei normalem Reifendruck den Reifen mit der vom Stellglied begrenzten Meßkammer verbindet, und das Stellglied wird vom Druckmeßglied in seine Anzeigestellung gebracht. Mit dem Stellglied ist ein Übertragungsmechanismus verbunden, mittels welchem eine Anzeigeeinrichtung betätigt wird.

Eine Einrichtung zur hilfsweisen Erzeugung des Stellweges weist diese bekannte Einrichtung nicht auf. Auch bei dieser Einrichtung wird das Stellglied bei intaktem Reifen ständig vom Reifendruck beaufschlagt.

Die Erfindung wird anhand eines Ausführungsbeispiels, das in der Zeichnung dargestellt ist, näher erläutert.

Es zeigen:
- **Fig.1**: eine am Fahrzeugrad angeordnete Einrichtung zur Überwachung des Druckes einer mit dem Druck eines Fahrzeugreifens beaufschlagten Meßkammer.
- **Fig.2**: eine Variante der Einrichtung gemäß Fig.1 mit einer zusätzlichen Signalerzeugungseinrichtung.

Die Einrichtung ist dafür vorgesehen, das Abfallen des Druckes eines Reifens auch bei dessen gänzlicher Entleerung anzuzeigen.

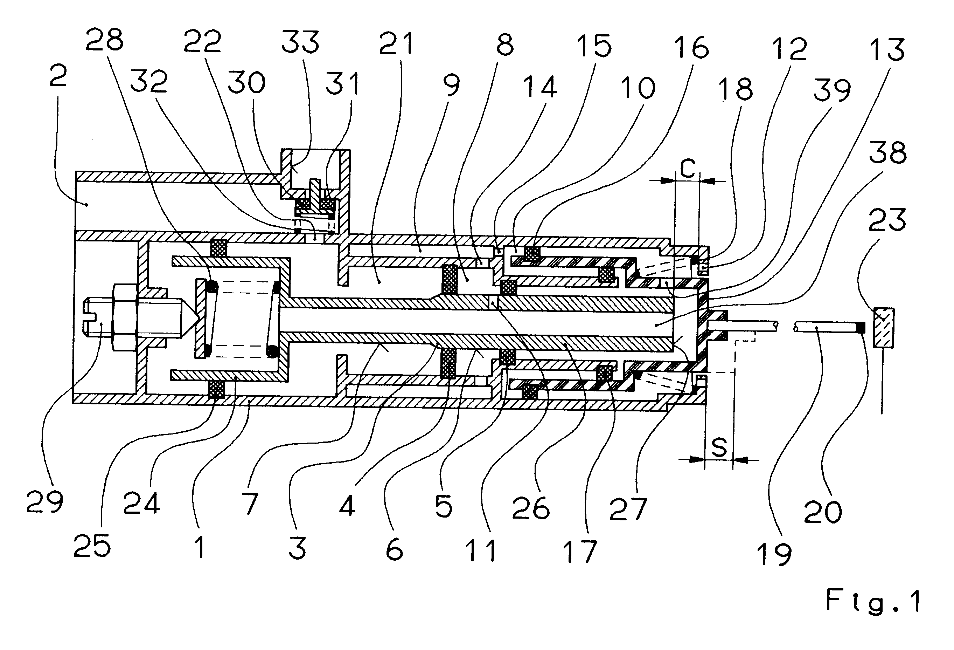

Die Fig.1 zeigt eine am Fahrzeugrad angeordnete druckempfindliche Einrichtung (1) mit einem Druckeinlaß (2), der mit dem Fahrzeugreifen verbunden und mit dem Reifendruck beaufschlagbar ist. Ein Ventilkörper (3) in der Art eines Ventilschiebers ist Teil einer Ventileinrichtung (3, 4; 3, 5), die mit einer Ventildichtung (4), ein Einlaßventil (3, 4) und mit einer Ventildichtung (5) ein Auslaßventil (3, 5) bildet. Der Ventilkörper (3) weist zwei unterschiedliche Durchmesser (6, 7) auf, wobei der größere Durchmesser (6) absatzartig in den kleineren Durchmesser (7) übergeht. In der dargestellten Position des Ventilkörpers (3) ist das Einlaßventil (3, 4) geschlossen. Das Auslaßventil (3, 5) befindet sich in der geöffneten Stellung in der über das Einlaßventil (3, 4) mit dem Reifendruck beaufschlagbare und miteinander mittels Durchlässe (14, 15) verbundene Druckkammern (8, 9, 10) über einen Durchlaß (11) und einer Kammer (38) des Ventilkörpers (3) sowie einem Durchlaß (39) mit einem Atmosphärenauslaß (12) der druckempfindlichen Einrichtung (1) verbunden sind. Durch eine Längsbewegung des Ventilkörpers (3) nimmt dieser eine Stellung ein, in der zwischen dem Durchmesser (7) und der Ventildichtung (4) ein Ringspalt entsteht, d.h. in der das Einlaßventil (3, 4) geöffnet ist. Gleichzeitig erfolgt ein Schließen des Auslaßventils (3, 5) indem der Durchlaß (11) mittels der Ventildichtung (5) von den Druckkammern (8, 9, 10) getrennt ist.

Die Druckkammer (10) ist begrenzt durch ein kolbenartig ausgebildetes Stellglied (13) und Dichtungen (16, 17), die dem Stellglied (13) auch als Führungselemente bei einer Bewegung in seiner axialen Richtung dienen. Mit einer Rückholfeder (18) wird das Stellglied (13) in einer Ausgangsstellung gehalten. Mit dem Stellglied (13) ist ein Übertragungsmechanismus (19) in der Art eines Gestänges (19) verbunden, das auch flexibel in der Art eines Bowdenzuges ausgebildet sein kann.

Mit dem Gestänge (19) ist ein signalgebendes Bauteil (20) relativ zu einem Sensor (23) bewegbar. Die Anordnung des Bauteils (20) zu dem Sensor (23) ist so ausgebildet, daß der Sensor (23) die Relativbewegung des Bauteils (20) registrieren und in entsprechende Sensorsignale umwandeln kann. Das Bauteil (20) kann z.B., wie in der DE 28 13 058 C2 offenbart, in einem der Sensierung der Radgeschwindigkeit dienenden Zahnkranz einer ABS-Einrichtung angeordnet sein, so daß eine dadurch erzielte Modifizierung des ABS-Signals als Reifendrucksignal erkennbar gemacht werden kann.

Mit dem Einlaßventil (3, 4) ist die Druckkammer (8) mit einer Meßkammer (21) verbindbar, die über einen Durchbruch (22) mit dem Druckeinlaß (2) verbunden und damit mit dem Reifendruck beaufschlagbar ist. Der Ventilkörper (3) weist eine kolbenartige Erweiterung (24) auf, die mit einer Dichtung (25) eine Begrenzung der Meßkammer (21) bildet. Der Ventilkörper (3) weist einen Fortsatz (26) auf, der so ausgebildet ist, daß bei geschlossenem Einlaßventil (3, 4) und druckloser Druckkammer (10) zwischen der Stirnfläche (27) des Fortsatzes (26) und dem Stellglied (13) ein Spiel (c) vorhanden ist, das in etwa dem für die Betätigung der Ventileinrichtung (3, 4; 3, 5) erforderlichen Betätigungshub entsprechen sollte.

Der Ventilkörper (3), die kolbenartige Erweiterung (24) und der Fortsatz (26) bilden ein Hilfsstellglied (3, 24, 26), das mit einem als Druckfeder (28) ausgebildeten Druckmeßglied (28) gegen den in der Meßkammer (21) herrschenden Reifendruck vorgespannt ist. Mit einer Stellschraube (29) ist die auf das Hilfsstellglied (3, 24, 26) wirkende Kraft des Druckmeßgliedes (28) einstellbar. Mit der Kraft des Druckmeßgliedes (28) ist die Höhe des in der Meßkammer (21) anstehenden Signaldruckes bestimmbar, bei der das Einlaßventil (3, 4) in die Offenstellung bewegt werden soll.

Das Druckmeßglied (28) kann auch mit einer (nicht dargestellten) bekannten Einrichtung kombiniert sein, mit der temperaturbedingte Reifendruckdifferenzen kompensierbar sind. Hierfür eignet sich z.B. eine mit dem Reifendruck beaufschlagte Referenzdruckdose.

In dem Ausführungsbeispiel gemäß Fig.1 ist das Stellglied (13) mit dem Übertragungsmechanismus (19) einstückig verbunden. Konstruktiven Bedingungen entsprechend, z.B. aus Gründen einer besseren Montierbarkeit oder Austauschbarkeit von Bauteilen, können das Stellglied (13) und der Übertragungsmechanismus (19) auch getrennt in Reihe angeordnet sein. Die Übertragung des Stellweges (s) würde dann durch Kontaktnahme des Stellgliedes (13) mit dem Übertragungsmechanismus (19) erfolgen.

Mit einem Ventilkörper (30), einem gehäusefesten Ventilsitz (31) sowie einer Ventilfeder (32) die den Ventilkörper (30) auf dem Ventilsitz (31) hält, ist mit einem entsprechenden Füllstutzen (33) ein an sich bekannter Reifenfüllanschluß gebildet, der in das Gehäuse der druckempfindlichen Einrichtung (1) integriert ist. Der Reifenfüllanschluß kann aber auch an einer anderen Stelle des Rades angebracht sein.

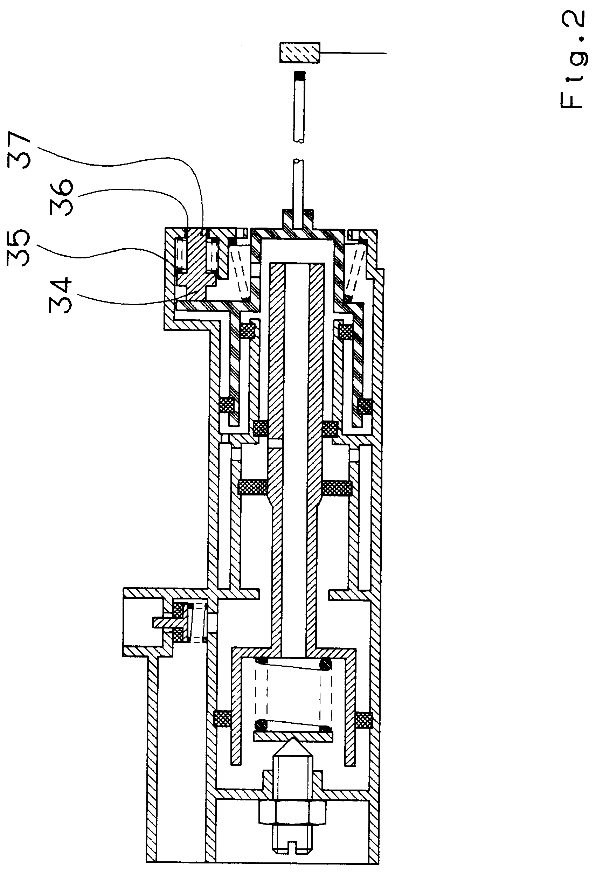

Die Fig.2 zeigt eine Signalerzeugungseinrichtung (34, 35, 36) in einem Teil des Gehäuses der im übrigen identischen druckempflindlichen Einrichtung (1) gemäß der Fig.1.

Die Signalerzeugungseinrichtung (34, 35, 36) ist aus einem Stellorgan (34) einer Rückstellfeder (35) und einem Gehäusedurchbruch (36) gebildet. Das Stellorgan (34) ist in Abhängigkeit von dem mit dem Stellglied (13) oder dem Hilfsstellglied (3, 24, 26) erzeugbaren Stellweg (s) gegen die Kraft der Rückstellfeder (35) betätigbar. Mit der Signalerzeugungseinrichtung (34, 35, 36) ist für die Dauer des erzeugten Stellweges (s) ein z.B. optisch wahrnehmbares Signal dadurch erzeugbar, daß ein z.B. stiftförmig ausgebildeter Teil (37) des Stellorganes (34) den Gehäusedurchbruch (36) durchdringt. In einer vorteilhaften Weise kann der signalerzeugende Teil (37) des Stellorgans (34) durch eine entsprechende Farbgebung optisch hervorgehoben sein. Anstelle des Durchbruches (36) kann auch ein Sichtfenster im Gehäuse vorhanden sein, das durch Überdecken mit dem signalerzeugenden Teil (37) der Erzeugung des optisch wahrnehmbaren Signals dient.

Die Wirkungsweise dieser Einrichtung ist wie folgt:

Steht ein Reifendruck, der gleich dem oder höher als der vorgegebene Reifensolldruck ist, am Druckeinlaß (2) und in der Druckkammer (21) an, dann befindet sich das Hilfsstellglied (3, 24, 26) in einer Schaltstellung, in der das Einlaßventil (3, 4) geschlossen ist. In diesem Betriebszustand sind die Druckkammern (8, 9, 10) über den Durchlaß (11, die Kammer (38), den Durchlaß (39) und den Auslaß (12) in die Atmosphäre entlüftet. Das Stellglied (13) ist drucklos und wird von der Rückholfeder (18) in einer nicht anzeigenden Ausgangsstellung gehalten. Der Sensor (23) empfängt dann kein Signal und die Signalerzeugungseinrichtung (34, 35, 36) gemäß Fig.2 erzeugt kein optisch wahrnehmbares Signal.

Bei Absinken des Reifendruckes unter den vorgegebenen Reifensolldruck überwiegt die Kraft des Druckmeßgliedes (28). Das Hilfsstellglied (3, 24, 26) wird dadurch in eine Schaltstellung bewegt, in der das Einlaßventil (3, 4) durch Bildung des Ringspaltes zwischen der Ventildichtung (4) und dem Durchmesser (7) des Ventilkörpers (3) geöffnet ist. Die Druckkammern (8, 9, 10) sind dann nicht mehr mit der Atmosphäre verbunden, weil der Durchlaß (11) die Dichtung (5) in Schließrichtung passiert hat.

In diesem Betriebszustand sind der Druckeinlaß (2), die Meßkammer (21) und die Druckkammern (8, 9, 10) über das Einlaßventil (3, 4) miteinander verbunden. Das Stellglied (13) ist dann mit dem Reifendruck beaufschlagt und mit dem Durchfahren des Stellweges (s) in die Signalstellung gebracht, in der der Sensor (23) durch die Annäherung des Bauteils (20) ein Signal empfängt. Entsprechend der Fig.2 ist das Stellorgan (34) der Signalerzeugungseinrichtung (34, 35, 36) durch das Stellglied (13) in die Anzeigestellung gebracht.

Infolge eines defekten Reifens oder einer gestörten Verbindung des Druckeinlasses (2) zum Reifen, kann durch einen über das Einlaßventil (3, 4) herbeigeführten Druckausgleich der zum Betätigen des Stellgliedes (13) in der Druckkammer (10) anstehende Druck so weit abfallen, daß das Stellglied (13) bei Überwiegen der Kraft der Rückstellfeder (18) dazu neigt, in die nicht anzeigende Stellung zurückzufahren. Durch einen solchen Druckabfall wird jedoch infolge der überwiegenden Kraft der in Betätigungsrichtung auf das Hilfsstellglied (3, 24, 26) wirkenden Kraft des Druckmeßgliedes (28) das Hilfsstellglied (3, 24, 26) in Richtung auf das Stellglied (13) bewegt und nach Kontaktnahme mit diesem, mit der Kraft des Druckmeßgliedes (28) weiterhin der Stellweg (s) erzeugt, bzw. mechanisch auf den Übertragungsmechanismus (19) übertragen.

Bei nicht einstückiger Verbindung von Stellglied (13) und Übertragungsmechanismus (19) würde, infolge Schwindens des auf das Stellglied (13) gerichteten Betätigungsdruckes, dieses in seine nicht anzeigende Ausgangsstellung zurückfahren, während das Hilfsstellglied (3, 24, 26) durch Kontakt mit dem Übertragungsmechanismus (19) in der Lage ist, die durch den Stellweg (s) gegebene Anzeige weiterhin aufrecht zu erhalten.

Bei Abschalten des elektrischen bzw. elektronischen Teils der Reifendrucküberwachung, oder bei Stillsetzen des Fahrzeuges kann zwar der Sensor (23) keine Information mehr übermitteln, jedoch bleibt die optisch wahrnehmbare Anzeige der Signalerzeugungseinrichtung (34, 35, 36) in Reifennähe erhalten.

Beim Wiederauffüllen des Reifens, d.h. nach Erreichen des vorgegebenen Reifensolldruckes am Druckeinlaß (2) wird, durch Entlüften der Druckkammern (8, 9, 10) das erste Stellglied (13) und mit ihr das Stellorgan (34) in die nichtanzeigenden Ausgangsstellungen zurückgesetzt. Hieraus ist das Erreichen des vorgegebenen Reifendruckes sowie die Funktionstüchtigkeit der druckempfindlichen Einrichtung (1) erkennbar.

## Patentansprüche

1. Einrichtung zur Überwachung des Druckes einer mit dem Druck eines Fahrzeugreifens beaufschlagten Meßkammer, mit folgenden Merkmalen:
a) es ist ein Stellglied (13) zur Erzeugung eines einen Druckabfall in der Meßkammer (21) anzeigenden Stellweges (S) vorgesehen, das mit dem Druck der Meßkammer (21) gegen eine Rückstellkraft in eine Signalstellung gebracht wird;
b) es ist eine in Abhängigkeit von dem Druck in der Meßkammer (21) steuerbare Ventileinrichtung (3, 4, 5) vorgesehen, mit der das Stellglied (13) nur bei Druckabfall zur Betätigung mit der Meßkammer (21) verbunden ist;
c) zur Steuerrung und Betätigung der Ventileinrichtung (3, 4, 5) ist ein vom Druck in der Meßkammer (21) beaufschlagtes Druckmeßglied (28) vorgesehen;
gekennzeichnet durch folgendes Merkmal:
d) das Druckmeßglied (28) ist so angeordnet und ausgebildet, daß es über ein Hilfsstellglied (3, 24, 26) zur hilfsweisen Erzeugung des Stellweges (S) dient und bei Druckabfall mechanisch entweder auf das Stellglied (13) gegen die Rückstellkraft (18) oder in gleicher Richtung auf einen vom Stellglied (13) betätigbaren Übertragungsmechanismus (19) wirkt.

2. Einrichtung nach Anspruch 1, dadurch gekennzeichnet, daß ein Übertragungsmechanismus (19) zur Übertragung des Stellweges (s) auf einen den Stellweg (s) abtastenden Sensor (23) vorgesehen ist.

3. Einrichtung nach Anspruch 2, dadurch gekennzeichnet, daß der Übertragungsmechanismus (19) aus einem vorzugsweise elastischen Gestänge (19) in der Art eines Bowdenzuges gebildet ist.

4. Einrichtung nach wenigstens einem der Ansprüche 2 oder 3, dadurch gekennzeichnet, daß das Stellglied (13) mit dem Übertragungsmechanismus (19) einstückig ausgebildet ist und der mit dem Hilfsstellglied (3, 24, 26) erzeugbare Stellweg (s) auf das Stellglied (13) mechanisch übertragbar ist.

5. Einrichtung nach Anspruch 4, dadurch gekennzeichnet, daß die mechanische Übertragung des Stellweges (s) von dem Hilfsstellglied (3, 24, 26) auf den Übertragungsmechanismus (19) nach Kontaktnahme des Hilfsstellgliedes (3, 24, 26) mit dem Stellglied (13) erfolgt.

6. Einrichtung nach Anspruch 1, gekennzeichnet durch die folgenden Merkmale:
a) das Hilfsstellglied (3, 24, 26) weist einen Abschnitt (3) auf, der so ausgebildet ist, daß er der Ventileinrichtung (3, 4; 3, 5) als Ventilkörper (3) dient;
b) der Abschnitt (3) bildet mit einer Dichtung (4) ein Einlaßventil (3, 4) mit dem das Stellglied (13) zur Druckbeaufschlagung mit der Meßkammer (21) verbindbar ist;
c) der Abschnitt (3) bildet mit einer Dichtung (5) ein Auslaßventil (3, 5) mit dem das Stellglied (13) zur Druckentlastung mit einem Atmosphärenauslaß (12) verbindbar ist.

7. Einrichtung nach den Ansprüchen 1 und 6, dadurch gekennzeichnet, daß die Kraft des Druckmeßgliedes (28) zur Betätigung der Ventileinrichtung (3, 4; 3, 5) dient, derart, daß bei einem Druck in der Meßkammer (21) unterhalb eines vorgegebenen Druckes das Einlaßventil (3, 4) geöffnet und das Auslaßventil (3, 5) geschlossen ist.

8. Einrichtung nach wenigstens einem der vorhergehenden Ansprüche, gekennzeichnet durch die folgenden Merkmale:
a) es ist eine Signalerzeugungseinrichtung (34, 35, 36) mit einem Stellorgan (34) vorgesehen, die in Abhängigkeit von dem mit dem stellglied (13) oder Hilfsstellglied (3, 24, 26) erzeugbaren Stellweg (s) gegen eine Rückstellkraft (35) betätigbar ist;
b) mit der Signalerzeugungseinrichtung (34, 35, 36) ist für die Dauer des erzeugten Stellweges (s) ein z.B. optisch wahrnehmbares Signal erzeugbar. (Fig. 2)

9. Einrichtung nach Anspruch 8, dadurch gekennzeichnet, daß die Signalerzeugungseinrichtung (34, 35, 36) in ein die druckempfindliche Einrichtung (1) umschließendes Gehäuse integriert ist.

10. Einrichtung nach Anspruch 9, dadurch gekennzeichnet, daß ein signalerzeugender Teil (37) des Stellorgans (34) aus einem einen Gehäusedurchbruch (36) durchdringenden Signalstift (37) gebildet ist.

11. Einrichtung nach Anspruch 10, dadurch gekennzeichnet, daß der signalerzeugende Teil (37) des Stellorgans (34) durch Farbgebung optisch hervorgehoben ist.

12. Einrichtung nach den Ansprüchen 8, 9, 11, dadurch gekennzeichnet, daß das optisch wahrnehmbare Signal durch eine gänzliche oder teilweise Überdeckung eines der Signalerzeugungseinrichtung (34, 35, 36) zugeordneten Sichtfensters erzeugbar ist.

## Claims

1. Device for monitoring the pressure of a measuring chamber that is acted upon by the pressure of a vehicle tyre, having the following features:
a) an actuator (13) is provided for producing a indicating movement (s) which indicates a fall in pressure in the measuring chamber (21), which actuator is brought into a signalling position by the pressure of the measuring chamber (21) against a restoring force;
b) a valve device (3, 4, 5) is provided which can be controlled in dependence upon the pressure in the measuring chamber (21) and by means of which the actuator (13) is connected to the measuring chamber (21), in order to be operated, only when there is a fall in pressure;
c) a pressure measuring member (28) which is acted upon by the pressure in the measuring chamber (21) is provided for controlling and operating the valve device (3, 4, 5);
characterised by the following feature:
d) the pressure measuring member (28) is so arranged and constructed that is serves, by means of an auxiliary actuator (3, 24, 26), for the auxiliary production of the indicating movement (s) and, when there is a fall in pressure, acts mechanically either on the actuator (13) against the restoring force (18) or in the same direction on a transmission mechanism (19) that can be operated by the actuator (13).

2. Device according to claim 1, characterised in that a transmission mechanism (19) is provided for transmitting the indicating movement (s) to a sensor (23) which senses the indicating movement (s).

3. Device according to claim 2, characterised in that the transmission mechanism (19) is formed by a preferably flexible rod (19) after the fashion of a Bowden cable.

4. Device according to at least one of claims 2 and 3, characterised in that the actuator (13) is constructed in one piece with the transmission mechanism (19) and the indicating movement (s) that can be produced by the auxiliary actuator (3, 24, 26) can be transmitted to the actuator (13) mechanically.

5. Device according to claim 4, characterised in that the mechanical transmission of the indicating movement (s) from the auxiliary actuator (3, 24, 26) to the transmission mechanism (19) takes place after the auxiliary actuator (3, 24, 26) has made contact with the actuator (13).

6. Device according to claim 1, characterised by the following features:
a) the auxiliary actuator (3, 24, 26) has a portion (3) which is constructed in such a manner that it serves the valve device (3, 4;, 3, 5) as a valve body (3);
b) the portion (3) forms with a seal (4) an inlet valve (3, 4) by means of which the actuator (13) can be connected to the measuring chamber (21) in order for it to be acted upon by pressure;
c) the portion (3) forms with a seal (5) an outlet valve (3, 5) by means of which the actuator (13) can be connected to an atmosphere outlet (12) in order for it to be relieved of pressure.

7. Device according to claims 1 and 6, characterised in that the force of the pressure measuring member (28) serves to operate the valve device (3, 4; 3, 5) such that, when a pressure in the measuring chamber (21) is below a given pressure, the inlet valve (3, 4) is opened and the outlet valve (3, 5) is closed.

8. Device according to at least one of the preceding claims, characterised by the following features:
a) a signal generating device (34, 35, 36) having an actuating member (34) is provided which can be operated in dependence upon the indicating movement (s), which can be produced by the actuator (13) or the auxiliary actuator (23, 24, 26), against a restoring force (35);
b) a perceptible signal, for example an optically perceptible signal, can be generated by the signal generating device (34, 35, 36) for the duration that the indicating movement (s) is produced (Fig. 2).

9. Device according to claim 8, characterised in that the signal generating device (34, 35, 36) is integrated into a housing which surrounds the pressure-sensitive device (1).

10. Device according to claim 9, characterised in that a signal generating part (37) of the actuating member (34) is formed by a signalling pin (37) which passes through an opening (36) in the housing.

11. Device according to claim 10, characterised in that the signal generating part (37) of the actuating member (34) is optically emphasised by being coloured.

12. Device according to claims 8, 9, 11, characterised in that the optically perceptible signal can be produced by completely or partially covering a viewing window assigned to the signal generating device (34, 35, 36).

## Revendications

1. Dispositif de surveillance de la pression d'une chambre de mesure exposée à la pression d'un pneumatique de véhicule, présentant les caractéristiques suivantes :
a) il est prévu un élément positionneur (13) pour produire une course (s) indiquant une chute de pression dans la chambre de mesure (21), cet élément positionneur étant mis à une position de signal par la pression de la chambre de mesure (21), contre une force de rappel;
b) il est prévu un dispositif de vanne (3, 4, 5) pouvant être commandé en fonction de la pression dans la chambre de mesure (21), dispositif avec lequel l'élément positionneur (13) n'est relié à la chambre de mesure (21), aux fins d'actionnement, qu'en cas de chute de pression;
c) pour commander et actionner le dispositif de vanne (3, 4, 5), il est prévu un organe de mesure de pression (28) sollicité par la pression dans la chambre de mesure (21);
caractérisé par la caractéristique suivante :
d) l'organe de mesure de pression (28) est agencé et réalisé de manière telle qu'il serve, par l'intermédiaire d'un organe positionneur auxiliaire (3, 24, 26), à la production assistée de la course (s), et qu'en cas de chute de pression, il agisse mécaniquement soit sur l'élément positionneur (13), contre la force de rappel (18), soit dans la même direction, sur un mécanisme de transmission (19) actionnable par l'élément positionneur (13).

2. Dispositif selon revendication 1, caractérisé par le fait qu'il est prévu un mécanisme de transmission (19) pour transmettre la course (s) à un capteur (23) captant ladite course (s).

3. Dispositif selon revendication 2, caractérisé par le fait que le mécanisme de transmission (19) est constitué par une tige (19) de préférence élastique, à la manière d'une transmission à système à câble de Bowden.

4. Dispositif selon au moins l'une des revendications 2 ou 3, caractérisé par le fait que l'élément positionneur (13) est réalisé d'une seule pièce avec le mécanisme de transmission (19), et la course (s) pouvant être produite avec l'organe positionneur auxiliaire (3, 24, 26) est transmissible mécaniquement à l'élément positionneur (13).

5. Dispositif selon revendication 4, caractérisé par le fait que la transmission mécanique de la course (s), de l'organe positionneur auxiliaire (3, 24, 26) au mécanisme de transmission (19), s'effectue après prise de contact de l'organe positionneur auxiliaire (3, 24, 26) avec l'élément positionneur (13).

6. Dispositif selon revendication 1, caractérisé par les caractéristiques suivantes :
a) l'organe positionneur auxiliaire (3, 24, 26) présente une portion (3) qui est réalisée de manière à servir d'obturateur de vanne (3) pour le dispositif de vanne (3, 4; 3, 5);
b) la portion (3) forme, avec un joint d'étanchéité (4), une vanne d'entrée (3, 4) avec laquelle l'élément positionneur (13) peut être relié à la chambre de mesure (21) pour être sollicité par pression;
c) la portion (3) forme, avec un joint d'étanchéité (5), une soupape de sortie (3, 5) avec laquelle l'élément positionneur (13) peut être relié à l'atmosphère aux fins de décharge de pression, par une sortie à l'atmosphère (12).

7. Dispositif selon les revendications 1 et 6, caractérisé par le fait que la force de l'organe de mesure de pression (28) sert à l'actionnement du dispositif de vanne (3, 4; 3, 5), de manière que s'il y a dans la chambre de mesure (21) une pression inférieure à une pression prédéterminée, la vanne d'entrée (3, 4) soit ouverte et la soupape de sortie (3, 5) soit fermée.

8. Dispositif selon au moins l'une des revendications précédentes, caractérisé par les caractéristiques suivantes :
a) il est prévu un dispositif générateur de signal (34, 35, 36), avec un organe positionneur (34) qui est actionnable, contre une force de rappel (35), en fonction de la course (s) produite par l'élément positionneur (13) ou par l'organe positionneur auxiliaire (3, 24, 26);
b) un signal décelable, par exemple optiquement, peut être produit, pendant la durée de la course de déplacement produite (s), avec le dispositif de production de signal (34, 35, 36) (figure 2).

9. Dispositif selon revendication 8, caractérisé par le fait que le dispositif de production de signal (34, 35, 36) est intégré dans une enceinte enveloppant le dispositif sensible à la pression (1).

10. Dispositif selon revendication 9, caractérisé par le fait qu'une partie productrice de signal (37) de l'organe positionneur (34) est constituée par un doigt de signalisation (37) traversant un ajour (36) de l'enceinte.

11. Dispositif selon revendication 10, caractérisé par le fait que la partie productrice de signal (37) de l'organe positionneur (34) est distinguée optiquement par coloration.

12. Dispositif selon les revendications 8, 9, 11, caractérisé par le fait que le signal décelable optiquement est produit par un recouvrement, total ou partiel, d'une fenêtre de visualisation associée au dispositif de production de signal (34, 35, 36).
